# FASCICULE DE BREVET EUROPEEN

(11) **EP 3 249 569 B1**
(45) Date de publication et mention de la délivrance du brevet: **23.05.2018**
(21) Numéro de dépôt: 17169113.2
(22) Date de dépôt: 02.05.2017
(51) Int. Cl.: G06F 21/32, G07C 9/00, H04L 9/32

(54) **PROCÉDÉ DE CONTRÔLE D'INDIVIDUS À AUTHENTIFICATION SIMPLIFIÉE**
KONTROLLVERFAHREN VON PERSONEN MIT VEREINFACHTER AUTHENTIFIZIERUNG
METHOD FOR MONITORING INDIVIDUALS WITH SIMPLIFIED AUTHENTICATION

(30) Priorité: 24.05.2016 FR 1654634
(43) Date de publication de la demande: 29.11.2017
(73) Titulaire: Safran Identity & Security, 92130 Issy-les-Moulineaux (FR)
(72) Inventeur: TOURET, Olivier, 92130 Issy Les Moulineaux (FR); CHASTEL, Pierre, 92130 Issy Les Moulineaux (FR)
(74) Mandataire: Regimbeau

(56) Documents cités:
- EP-A2- 2 259 232
- WO-A1-2013/153118
- FR-A1- 2 975 550

## Description

### DOMAINE DE L'INVENTION

L'invention concerne un procédé de contrôle d'un individu disposant d'un document d'identité tel qu'un passeport, comprenant une zone de lecture automatique sur laquelle figure un numéro du document, et une puce électronique dans laquelle est stockée une donnée biométrique d'authentification de l'individu. L'invention s'applique notamment au contrôle d'individus pour l'accès à une zone ou un service protégé tel que l'accès à l'embarquement d'un avion.

### ETAT DE LA TECHNIQUE

Un contrôle d'identité est parfois exigé lorsqu'un individu accède à une zone ou à un service protégé, comme par exemple lors du passage d'une frontière ou lors d'un embarquement dans un avion.

Des documents d'identité électroniques tels que passeports ou cartes d'identités électroniques permettent de mettre en oeuvre un contrôle d'identité par authentification biométrique, c'est-à-dire par comparaison d'une donnée biométrique acquise sur un trait biométrique de l'individu à une donnée biométrique préenregistrée dans une puce contenue dans le document d'identité.

De tels documents permettent un accroissement de sécurité car la donnée biométrique qui est contenue dans le document peut être protégée et signée par une entité officielle ayant délivré le document, ce qui peut être vérifié lors du contrôle.

Ils permettent également d'automatiser les contrôles d'identité effectués, au moyen de dispositifs de contrôle dédiés, en laissant les individus manipuler eux-mêmes leurs passeports pour les soumettre, pour lecture, à un dispositif de contrôle.

Cependant, la manipulation physique de documents d'identités, et notamment de documents sous forme de livret comme les passeports, peut poser des difficultés à l'individu souhaitant s'identifier.

En effet, les données biométriques contenues dans les documents d'identité sont protégées en lecture. Il est nécessaire pour y accéder d'obtenir le numéro du document d'identité, qui figure sur une zone de lecture automatique, également appelée MRZ (pour l'acronyme de l'anglais Machine-Readable Zone). Une telle zone de lecture automatique est une partie de la surface du document (ou, le cas échéant, d'une de ses pages) comportant du texte imprimé dans un format normalisé, de sorte à pouvoir être lu par un ordinateur et déchiffré par reconnaissance optique des caractères imprimés.

Par conséquent, pour pourvoir réaliser l'authentification, l'individu doit présenter le document à la page particulière sur laquelle se trouve la zone de lecture automatique, dans une direction spécifique permettant à un lecteur du dispositif de contrôle de la lire. Une fois le numéro acquis, il peut être utilisé pour accéder au contenu de la puce.

Par conséquent, à défaut de présenter correctement le document d'identité, l'authentification de l'individu peut échouer.

Cette étape de manipulation physique est chronophage et tend à engorger les files d'attentes, par exemple dans les aéroports. Elle est de plus la cause d'une proportion substantielle des échecs à l'authentification des individus.

Il est par conséquent nécessaire, pour désengorger les files d'attente au niveau des points de passage, de limiter autant que possible les manipulations de ces documents pour authentifier un individu lors d'un contrôle.

Une solution à cette problématique a déjà été proposée. Elle prévoit de scinder en deux l'étape de contrôle de l'individu, en une première étape lors de laquelle une manipulation du document d'identité est nécessaire, et une seconde étape lors de laquelle l'authentification a lieu, sans manipulation du document d'identité.

Plus précisément, lors d'une première étape, un individu manipule son passeport pour le positionner correctement sur un lecteur d'un dispositif de contrôle, qui lit la zone de lecture automatique du passeport, et accède à la donnée biométrique, en l'occurrence une image du visage de l'individu, contenue dans le passeport.

Un numéro est associé à cette donnée biométrique, et un ticket portant ce numéro est délivré à l'individu. La donnée ainsi que le numéro sont enregistrés dans une base de données.

Lors de la deuxième étape, l'individu présente le ticket à un deuxième dispositif de contrôle. Ce dispositif lit le numéro inscrit sur le ticket et accède à la base de données pour récupérer la donnée biométrique correspondante.

Dans le même temps, une photographie de l'individu est prise par le dispositif de contrôle, et cette photographie est comparée à la donnée biométrique récupérée de la base (et qui correspond à celle stockée dans le passeport) pour faire l'authentification biométrique de l'individu.

Cette solution permet donc de déplacer l'étape chronophage de manipulation du passeport en amont de l'étape d'authentification qui permet l'accès à la zone sécurisée, et de désengorger la file d'attente pour cette étape.

Cependant, cette solution ne résout pas complètement le problème, car le ticket délivré à l'individu représente un document supplémentaire à conserver, qui peut être perdu ou échangé. De plus, il est tout de même nécessaire de manipuler ce ticket lors de la deuxième étape, ce qui peut encore prendre du temps et provoquer des erreurs. Le document WO 2013/153118 A1 divulgue le procédé standard pour contrôler les documents d'identité biométriques comprenant une puce protégée par le protocole BAC (basic access control). Dans ce procédé standard, une étape préliminaire de lecture de la zone de lecture automatique (MRZ) est nécessaire avant de pouvoir accéder aux données biométriques stockées dans la puce. Ce document divulgue en outre un procédé pour accélérer le processus d'authentification. Ce procédé prévoit la saisie préliminaire des données de la zone MRZ du document d'identité par l'utilisateur (voyageur), par exemple lors de la procédure d'émission de la carte d'embarquement, et l'inclusion de ces données dans la carte d'embarquement qui sera envoyée au téléphone intelligent de l'utilisateur ou qui sera imprimée sur papier. Ceci permet que la clé qui est nécessaire pour lire les données de la puce biométrique lors du contrôle d'identité puisse être extraite de la carte d'embarquement imprimée ou du téléphone mobile par connexion NFC de manière efficace et rapide, sans que le passager ne doive scanner sur place la page du document d'identité comprenant la zone MRZ.

### PRESENTATION DE L'INVENTION

L'invention a pour but de remédier à la problématique décrite ci-avant. En particulier, l'un des buts de l'invention est de proposer un procédé de contrôle automatique minimisant la manipulation de documents par l'individu.

Un autre but de l'invention est de réduire le temps nécessaire pour la mise en oeuvre de l'étape d'authentification.

Un autre but de l'invention est de proposer un procédé de contrôle qui soit de mise en oeuvre simple et pratique pour les individus.

A cet égard l'invention a pour objet un procédé de contrôle d'un individu disposant d'un document d'identité comprenant une zone de lecture automatique sur laquelle figure un numéro du document et une puce électronique dans laquelle est stockée une donnée biométrique d'authentification de l'individu, le procédé comprenant :
- lors d'une première étape mise en oeuvre par un premier dispositif de contrôle,
   ∘ acquisition d'une première donnée biométrique sur un trait biométrique de l'individu,
   ∘ acquisition du numéro d'un document d'identité de l'individu par lecture de la zone de lecture automatique du document d'identité, et
   ∘ enregistrement, dans une mémoire distante, du numéro en lien avec la donnée biométrique de l'individu, et
- lors d'une deuxième étape mise en oeuvre par un deuxième dispositif de contrôle,
   ∘ acquisition d'une deuxième donnée biométrique sur le même trait biométrique de l'individu que celui sur lequel la première donnée a été acquise,
   ∘ à partir de la deuxième donnée biométrique, récupération, dans la mémoire, du numéro de document d'identité correspondant au trait biométrique de l'individu,
   ∘ à partir du numéro du document d'identité de l'individu, accès au contenu de la puce électronique du document d'identité et récupération de la donnée biométrique d'authentification, et
   ∘ mise en oeuvre d'une authentification biométrique de l'individu par comparaison de la donnée biométrique d'authentification stockée dans la puce et d'une donnée biométrique acquise par le deuxième dispositif de contrôle.

Avantageusement, mais facultativement, le procédé selon l'invention peut en outre comprendre au moins l'une des caractéristiques suivantes :
- la donnée biométrique acquise par le deuxième dispositif de contrôle pour l'étape d'authentification biométrique peut être la deuxième donnée biométrique, ou une autre donnée biométrique acquise sur un trait biométrique différent.
- l'étape de récupération du numéro du document d'identité dans la mémoire peut comprendre :
   ∘ une comparaison des données biométriques stockées dans la mémoire avec la deuxième donnée biométrique, et
   ∘ la sélection d'au moins un numéro correspondant à au moins une donnée biométrique présentant un taux de similarité avec la deuxième donnée supérieure à un seuil prédéterminé.
- si plus d'un numéro de document d'identité a été sélectionné, l'étape d'accès au contenu de la puce du document d'identité peut comprendre la mise en oeuvre d'une tentative d'ouverture de la puce à partir de chaque numéro sélectionné jusqu'à l'ouverture de la puce.
- la première étape peut comprendre également l'enregistrement, dans la mémoire distante, d'au moins une donnée supplémentaire en lien avec le numéro du document d'identité et la première donnée biométrique, et l'étape de récupération du numéro du document d'identité comprend la présélection, dans la mémoire, des données biométriques et des numéros de documents associés à ladite donnée supplémentaire.
- lors de la deuxième étape, la donnée supplémentaire peut être acquise par le deuxième dispositif de contrôle, ou être connue du deuxième dispositif de contrôle en étant associée à celui-ci, c'est-à-dire en lui étant intrinsèquement liée.
- le trait biométrique sur lequel sont acquises les première et deuxième données biométrique peut être choisi parmi le groupe comprenant : une ou plusieurs empreintes digitales, un ou plusieurs iris, le visage de l'individu, le réseau veineux d'un ou plusieurs doigts ou d'une ou des deux mains, ou les tailles respectives de phalanges ou de doigts.
- l'étape peut comprendre l'acquisition d'une pluralité de données biométriques sur des traits biométriques différents de l'individu, et l'enregistrement du numéro du document en lien avec chacune des données biométriques.
- le document d'identité peut être un passeport, et :
   ∘ lors de la première étape, le passeport est présenté ouvert à la page de la zone de lecture automatique auprès premier dispositif de contrôle pour la mise en oeuvre de l'étape d'acquisition du numéro du passeport, et
   ∘ lors de la deuxième étape, le passeport est présenté fermé auprès deuxième dispositif de contrôle pour la mise en oeuvre de l'étape d'accès au contenu de la puce.
- lors de la deuxième étape, le passeport peut être présenté dans une orientation quelconque relativement au deuxième dispositif de contrôle.
- le premier dispositif de contrôle peut être distant physiquement du deuxième, et est un dispositif personnel à l'individu parmi un téléphone mobile, une tablette numérique, et un ordinateur personnel, ou un kiosque installé dans une même infrastructure que le deuxième dispositif de contrôle.

Selon un autre objet, l'invention concerne un produit programme d'ordinateur, comprenant des instructions de code pour la mise en oeuvre du procédé comprenant des étapes de :
- acquisition et traitement d'une image d'un trait biométrique d'un individu pour obtenir une donnée biométrique,
- lecture d'une zone de lecture automatique d'un document d'identité pour acquérir un numéro du document, et
- enregistrement, dans une mémoire distante, du numéro en lien avec la donnée biométrique,
quand il est mis en oeuvre par un processeur.

Selon un autre objet, l'invention concerne également un produit programme d'ordinateur, comprenant des instructions de code pour la mise en oeuvre du procédé comprenant des étapes de :
- acquisition et traitement d'une image d'un trait biométrique d'un individu pour obtenir une donnée biométrique,
- à partir de ladite donnée biométrique, récupération, dans une mémoire, d'un numéro de document d'identité correspondant au trait biométrique à partir duquel la donnée a été acquise, et
- à partir du numéro du document d'identité de l'individu, accès au contenu de la puce électronique du document d'identité et récupération d'une donnée biométrique d'authentification contenue dans ladite puce,
quand il est mis en oeuvre par un processeur

L'invention a également pour objet un système de contrôle d'individus, comprenant :
- une mémoire,
- un premier dispositif de contrôle, comprenant un module de lecture d'une zone de lecture automatique d'un document d'identité, un module d'acquisition de donnée biométrique, et une interface de communication avec la mémoire, et
- un deuxième dispositif de contrôle, comprenant un module d'acquisition de donnée biométrique, un lecteur adapté pour accéder au contenu d'une puce d'un document d'identité, et une interface de communication avec la mémoire,
caractérisé en ce qu'il est adapté pour la mise en oeuvre du procédé selon la description qui précède.

Avantageusement, mais facultativement, dans le système de contrôle d'individus selon l'invention, le premier dispositif de contrôle est un dispositif électronique personnel d'un individu parmi un ordinateur personnel, un téléphone mobile et une tablette numérique.

L'invention proposée permet de faciliter le procédé de contrôle puisque l'étape de manipulation du document d'identité est séparée de l'étape d'authentification et peut même être mise en oeuvre par l'individu avec un dispositif électronique personnel tel qu'un téléphone mobile, dans l'endroit de son choix (par exemple à son domicile).

De plus, l'étape d'authentification est facilitée puisqu'il suffit d'acquérir une nouvelle donnée biométrique sur l'individu pour pouvoir récupérer le numéro du document d'identité et accéder au contenu de la puce. Il n'est donc pas nécessaire de manipuler le document pour présenter la zone de lecture automatique à un lecteur. Dans le cas d'un document sous forme de livret tel qu'un passeport, celui-ci peut même être présenté fermé au dispositif de contrôle, puisque ceci n'empêche pas le dispositif de contrôle d'accéder au contenu de la puce.

En outre, aucun document supplémentaire ne vient s'ajouter au document d'identité pour mettre en oeuvre l'authentification.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1 représente schématiquement un système de contrôle,
- Les figures 2 et 3 représentent schématiquement les principales étapes d'un procédé de contrôle.

### DESCRIPTION DETAILLEE D'AU MOINS UN MODE DE REALISATION DE L'INVENTION

### Système de contrôle d'individus

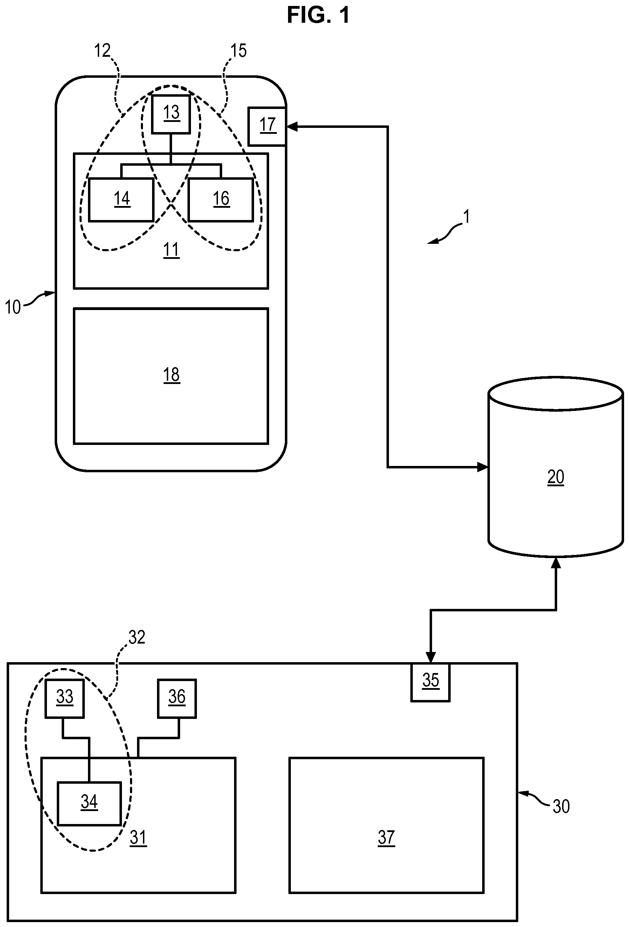

En référence à la figure 1, un système de contrôle d'individus 1 est représenté. Ce système permet de réaliser l'authentification biométrique d'individus pour autoriser ou interdire l'accès d'individus à une zone ou à un service sécurisé.
Pour pouvoir effectuer le contrôle, l'individu doit disposer d'un document d'identité comprenant une puce électronique, par exemple une puce RFID, dans laquelle est stockée une donnée biométrique, acquise à partir d'un trait biométrique de l'individu.

La donnée biométrique contenue dans le document d'identité est dans la suite qualifiée de donnée biométrique d'authentification.

Le document d'identité comporte également un numéro identifiant ledit document, ce numéro étant imprimé sur une zone de lecture automatique ou MRZ, c'est-à-dire une portion de la surface du document ou de l'une de ses pages, en un format lisible par un ordinateur ou toute unité de traitement équivalente pouvant mettre en oeuvre une reconnaissance optique de caractères.

Le document d'identité est avantageusement un passeport, c'est-à-dire un document se présentant sous la forme d'un livret comprenant des couvertures et un ensemble de pages, la zone de lecture automatique figurant sur l'une des pages du livret, impliquant l'ouverture à la bonne page et le positionnement correct du passeport pour la lecture de cette zone.

Le système de contrôle d'individus peut par exemple permettre de contrôler des individus avant d'embarquer à bord d'un avion ou avant de franchir la frontière d'un pays.

Le système de contrôle d'individus 1 comprend un premier dispositif de contrôle 10, une mémoire 20, et un deuxième dispositif de contrôle 30.

Le deuxième dispositif de contrôle 30 est avantageusement disposé en entrée d'une zone d'accès sécurisé. Il peut prendre la forme d'un portique dont le franchissement par l'individu n'est autorisé qu'en cas de succès du contrôle.

Le premier dispositif de contrôle 10 est avantageusement un dispositif électronique personnel à l'individu, c'est-à-dire un ordinateur personnel, un téléphone mobile ou encore une tablette numérique.

En variante, il peut s'agir d'une structure de contrôle fixe telle qu'un kiosque, située dans la même infrastructure (par exemple le même bâtiment) que le dispositif de contrôle 30 et à distance de celui-ci. Par exemple, dans le cas d'un contrôle dans un aéroport précédant l'embarquement dans un avion, le premier dispositif de contrôle peut être situé dans le même terminal de départ que le deuxième. Cependant, il n'est pas situé dans la file d'attente du deuxième dispositif de contrôle pour pouvoir scinder le flux des individus utilisant les deux dispositifs.

Le premier dispositif de contrôle 10 comporte un calculateur 11, tel que par exemple un processeur, un microprocesseur, un contrôleur, etc.

Il comporte également un module 12 de lecture du contenu d'une zone de lecture automatique ou MRZ d'un document. Le module 12 peut par exemple comprendre un capteur d'image 13, tel que par exemple un appareil photographique numérique ou une caméra numérique, adapté pour acquérir une image de la zone de lecture automatique, et un module 14 de reconnaissance de caractères. Le module 14 peut être une application logicielle exécutable par le calculateur 11 ou alternativement un module matériel. Ceci peut être le cas lorsque par exemple le premier dispositif de contrôle est le téléphone mobile ou la tablette ou l'ordinateur personnel de l'individu, et que ce dispositif est configuré pour réaliser la reconnaissance de caractères. En variante, le traitement de l'image de la zone de lecture automatique peut être réalisé à distance si le dispositif de l'individu ne dispose pas de cette fonctionnalité. Dans ce cas, le module 14 peut être une application logicielle exécutable par un calculateur d'une autre unité de traitement distante du premier dispositif de contrôle (non représentée), et le premier dispositif de contrôle comprend alors une interface de communication avec l'unité de traitement distante permettant de lui envoyer l'image de la zone de lecture automatique sur laquelle la reconnaissance de caractères doit être effectuée.

En outre le dispositif de contrôle 10 comprend un module 15 d'acquisition d'une donnée biométrique sur un trait biométrique d'un individu. Le trait biométrique peut par exemple être la forme du visage, une ou plusieurs empreintes digitales de l'individu, ou encore un ou plusieurs iris de l'individu. Il peut encore s'agir de la structure du réseau veineux d'un ou plusieurs doigts ou d'une ou des deux mains, ou des tailles respectives de phalanges ou de doigts.

Le module d'acquisition de la donnée biométrique 15 comprend un capteur d'image, qui est avantageusement le capteur 13 indiqué ci-dessus, et un module 16 de traitement d'images adapté pour extraire une donnée biométrique à partir d'une image d'un trait biométrique. L'extraction de la donnée biométrique est mise en oeuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction des minuties des empreintes digitales à partir d'une image d'empreintes digitales. En variante, elle peut comprendre en une extraction de points particuliers ou d'une forme du visage dans le cas où l'image est une image du visage de l'individu, etc.

Enfin le premier dispositif de contrôle 10 comprend une interface de communication 17 à distance avec une mémoire 20 du système de contrôle 1. Cette interface permet au calculateur 11 d'échanger des informations avec la mémoire 20. La mémoire 20 est avantageusement distante du premier dispositif de contrôle 10. Par conséquent l'interface de communication 17 est de préférence la combinaison d'une interface de communication sans fil, par exemple de type Wifi ou Bluetooth ou réseau de téléphonie mobile (GPRS, 3G, 4G ou autre) et de tout autre réseau de communication aval faisant le lien avec le mémoire 20.

Avantageusement, mais facultativement, le premier dispositif de contrôle 10 peut enfin comprendre une interface de saisie d'informations 18 telle qu'un clavier, un écran tactile, etc.

Le deuxième dispositif de contrôle 30 comprend un calculateur 31, qui peut également être un processeur, microprocesseur, contrôleur, etc.

Il comprend également un module d'acquisition de donnée biométrique 32 sur un trait biométrique d'un individu, qui comprend avantageusement un capteur d'image 33 adapté pour acquérir une image d'un trait biométrique d'un individu, et un module de traitement d'images 34 adapté pour extraire une donnée biométrique à partir d'une image d'un trait biométrique, par un traitement approprié de l'image du trait biométrique. Le capteur d'image 33 peut être par exemple un appareil photographique numérique ou une caméra numérique. Comme pour le module 16 de traitement d'images, la technique d'extraction mise en oeuvre par le module 34 est connue de l'Homme du Métier et dépend de la nature du trait biométrique considéré.

La mémoire 20 du système de contrôle 1, déjà évoquée ci-avant, peut être une mémoire intégrée au dispositif de contrôle 30. En variante, elle peut être une mémoire distante du dispositif de contrôle 30, avantageusement une base de données. Dans ce cas, ce dernier comprend également une interface de communication à distance 35 avec la mémoire 20.

Enfin le deuxième dispositif de contrôle 30 comprend un lecteur 36 de puce d'un document d'identité. Typiquement, la puce contenue dans le document d'identité est une puce radiofréquence (par exemple une étiquette de radio-identification RFID ou une puce UHF), et le lecteur 36 est adapté pour lire le contenu de la puce à distance, par une communication radiofréquences avec la puce.

Le deuxième dispositif de contrôle 30 peut également comprendre une interface de saisie d'informations 37 telle qu'un clavier, un écran tactile, etc.

Le système 1 est adapté pour mettre en oeuvre le procédé de contrôle décrit ci-dessous.

### Procédé de contrôle d'individus

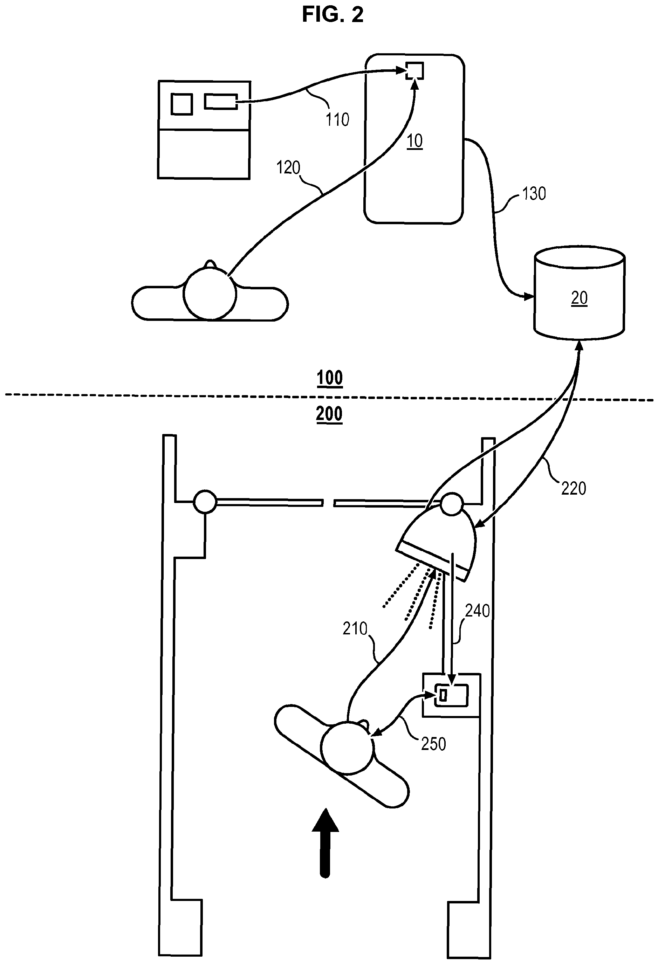

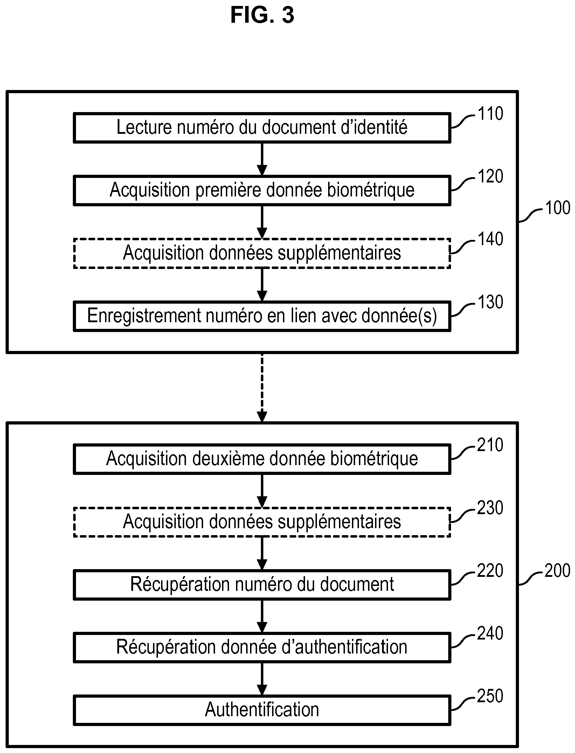

En référence aux figures 2 et 3, on a représenté les principales étapes d'un procédé de contrôle d'un individu. Ce procédé permet de vérifier que l'individu qui se présente pour le contrôle correspond à celui à qui le document d'identité a été délivré, en réalisant une authentification biométrique par comparaison d'une donnée biométrique fraîchement acquise sur l'individu avec la donnée biométrique d'authentification stockée dans la puce contenue dans le document.

Le procédé présente une première étape 100 mise en oeuvre par le premier dispositif de contrôle 10. Comme on l'a vu, le premier dispositif de contrôle pouvant être un dispositif personnel à l'individu, la première étape 100 peut dans ce cas être mise en oeuvre dans n'importe quel endroit commode pour l'individu, et notamment chez lui.

La première étape 100 comporte une étape 110 de lecture du numéro du document d'identité inscrit dans la zone de lecture automatique du document. Cette étape nécessite que l'individu manipule le document d'identité pour présenter son document au capteur 13, à la page de la zone de lecture automatique, et avec la zone de lecture automatique en visée de la zone d'acquisition du capteur 13, c'est-à-dire présentée en une position et selon une direction permettant au capteur d'acquérir une image de la zone. Le module 12 de lecture du premier dispositif de contrôle acquiert une image de la zone de lecture automatique et extrait de cette zone le numéro du document.

La première étape 100 comporte également une étape 120 d'acquisition d'une première donnée biométrique sur un trait biométrique de l'individu, au moyen du module 12.

En variante, lors de l'étape 120, plusieurs données biométriques de l'individu peuvent être acquises sur différents traits biométriques. Par exemple, une première donnée biométrique à partir de l'iris de l'individu, et une deuxième à partir du visage, ou de l'empreinte digitale, etc.

L'ordre de succession des étapes 110 et 120 est indifférent.

Puis, lors d'une étape 130, le premier dispositif de contrôle 10 enregistre dans la mémoire 20 le numéro du document d'identité en lien avec la première donnée biométrique, ou le cas échéant chacune des données biométriques acquises à l'étape 120. A titre d'exemple non limitatif, une donnée peut être générée par le calculateur 11, comprenant le numéro et la première donnée biométrique, par exemple sous forme de doublet, et stockée dans la mémoire.

Le fait d'enregistrer plusieurs données biométriques en lien avec le numéro du document d'identité peut permettre au procédé d'être compatible avec des technologies différentes mises en oeuvre au niveau de points de contrôle différents, ou d'augmenter la sécurité du procédé en utilisant dans la suite du procédé plusieurs données biométriques pour retrouver le numéro du document d'identité.

Avantageusement, mais facultativement, la première étape 100 du procédé peut également comprendre l'acquisition 140 de données supplémentaires comprenant :
- Des données d'identité relatives à l'individu, ces données pouvant par exemple être confrontées à des données figurant sur le document d'identité et permettant une sécurité accrue du contrôle (par exemple, nom, prénom(s), date et lieu de naissance), et/ou
- Des données permettant de discriminer l'individu parmi un ensemble d'individus franchissant le même contrôle. Par exemple, dans le cas d'un embarquement pour un vol, les données peuvent comprendre le numéro du vol, le nom de la compagnie aérienne, l'aéroport d'atterrissage et/ou de décollage, etc. En variante, dans le cas d'un passage de frontière, il peut s'agir d'un numéro de visa, d'un pays de provenance, etc.

L'étape d'acquisition 140 est avantageusement mise en oeuvre avant l'étape 130, et dans ce cas lors de cette étape 130 les données permettant de discriminer l'individu sont aussi enregistrées en lien avec le numéro du document et la donnée biométrique acquise sur l'individu.

Le procédé comprend ensuite une deuxième étape 200 mise en oeuvre par le deuxième dispositif de contrôle 30. Cette étape est mise en oeuvre après l'étape 100, par exemple quelques minutes ou quelques heures plus tard, voire le lendemain ou encore plusieurs jours après.

Lors de cette deuxième étape 200, l'individu se présente auprès du deuxième dispositif de contrôle 30 et présente au module d'acquisition de donnée biométrique 32 le même trait biométrique que celui à partir duquel la première donnée biométrique a été acquise. Une deuxième donnée biométrique est acquise sur ce trait lors d'une étape 210.

Lors d'une étape 220, le deuxième dispositif de contrôle 30 récupère dans la mémoire 20, à partir de cette donnée biométrique, le numéro du document préalablement enregistré pour le même individu. Pour ce faire, le dispositif recherche dans la mémoire 20 une donnée biométrique correspondant à la deuxième donnée biométrique, c'est-à-dire qui a été acquise sur le même trait, par comparaison de la deuxième donnée biométrique avec les données biométriques enregistrées dans la mémoire. Une correspondance est établie si un taux de similarité entre deux données biométriques excède un seuil prédéterminé, qui dépend de la façon dont la comparaison est établie et de la nature du trait biométrique. Un exemple non limitatif de mise en oeuvre de comparaison entre deux données est par un calcul de distance (distance euclidienne, distance de Hamming, etc.) entre les données.

Le dispositif de contrôle 30 récupère alors le numéro de document correspondant à chacune des données biométriques présentant un niveau de correspondance avec la deuxième donnée supérieure audit seuil. Le dispositif de contrôle 30 peut donc récupérer un ou plusieurs numéros de documents.

Si plusieurs données biométriques ont été acquises sur des traits biométriques différents à l'étape 120, alors soit plusieurs données biométriques sont acquises sur les mêmes traits à l'étape 210 et sont exploitées pour l'étape 220 de recherche du numéro du document d'identité, ce qui augmente la sécurité du document, soit une seule donnée biométrique est acquise et utilisée pour l'étape 220. La diversité de données acquises à l'étape 120 permet dans ce cas d'augmenter la compatibilité du procédé avec différents dispositifs de contrôle 30.

Dans le cas où, au cours de l'étape 100, des données supplémentaires permettant de discriminer l'individu ont été enregistrées en lien avec la première donnée biométrique et le numéro du document, l'étape 200 peut comprendre une étape supplémentaire 230 d'acquisition des données supplémentaires, au cours de laquelle l'individu saisit à nouveau la ou les même(s) donnée(s) que lors de l'étape 140. Avantageusement, cette saisie n'est pas nécessaire si ces données supplémentaires de l'étape 140 sont intrinsèquement et donc préalablement connues par le dispositif de contrôle 30, par exemple du fait de sa localisation si ces données désignent l'aéroport dans lequel est situé le dispositif de contrôle 30.

Cette étape 230 est mise en oeuvre avant l'étape 220. Dans ce cas, les données supplémentaires sont utilisées pour restreindre l'ensemble des données biométriques de la mémoire à comparer avec la deuxième donnée biométrique, en ne sélectionnant que les données biométriques enregistrées dans la mémoire en lien avec les mêmes données supplémentaires (par exemple, même numéro de vol, même destination, etc.).

Ceci accélère la mise en oeuvre de l'étape 220 et réduit le nombre de numéros de documents obtenues à la fin de cette étape.

Puis l'étape 200 comprend une étape 240 au cours de laquelle l'individu présente son document au lecteur 36 du deuxième dispositif de contrôle, et le dispositif de contrôle 30 lit le contenu de la puce du document pour récupérer la donnée biométrique d'authentification à partir du ou des numéros de document qu'il détient.

Comme le lecteur 36 lit seulement les informations stockées dans la puce contenue dans le document, et pas celles indiquées dans une zone de lecture automatique, il n'est pas nécessaire de présenter le document ouvert ou dans une direction particulière. En particulier, le passeport peut être présenté fermé, par exemple en étant posé sur un support dédié (non représenté) du deuxième dispositif de contrôle. Ceci implique un gain de temps considérable pour l'individu, qui n'a pas besoin de manipulation particulière du document d'identité, ou de tout autre document dont une zone de lecture ou un code-barres devrait être lu(e) et supprime les risques d'échecs liés à cette manipulation.

Le lecteur accède à la donnée biométrique d'authentification en utilisant le numéro du document comme mot de passe. Dans le cas où il a récupéré à l'issue de l'étape 220 plusieurs numéros, le lecteur tente d'ouvrir la puce en essayant les numéros l'un après l'autre jusqu'à essayer celui qui correspond au document d'identité de l'individu et qui autorise l'accès au contenu de la puce.

Puis, l'étape 200 comprend une étape d'authentification biométrique 250 de l'individu. Cette étape comprend la comparaison de la donnée biométrique d'authentification contenue dans la puce du document avec une autre donnée biométrique acquise sur le même trait. Cette autre donnée peut être la deuxième donnée biométrique qui a été acquise pour récupérer le numéro du document dans la mémoire, simplifiant ainsi l'étape 250 qui ne comporte alors pas de sous-étape d'acquisition biométrique.

En variante, cette autre donnée peut être une troisième donnée biométrique acquise par le dispositif de contrôle exclusivement aux fins de l'authentification. Ceci est notamment le cas si le trait biométrique correspondant à la donnée d'authentification est différent de celui correspondant aux première et deuxième données.

En fonction du résultat de l'authentification biométrique, l'accès à la zone est autorisé ou refusé pour l'individu.

Ainsi le procédé proposé supprime la manipulation du document d'identité lors de la deuxième étape comprenant l'authentification biométrique de l'individu, sans ajouter de manipulation d'un document supplémentaire, ce qui simplifie et accélère le franchissement de cette étape.

## Revendications

1. Procédé de contrôle d'un individu disposant d'un document d'identité comprenant une zone de lecture automatique sur laquelle figure un numéro du document et une puce électronique dans laquelle est stockée une donnée biométrique d'authentification de l'individu, le procédé comprenant :
- lors d'une première étape (100) mise en oeuvre par un premier dispositif de contrôle (10),
∘ acquisition (120) d'une première donnée biométrique sur un trait biométrique de l'individu,
∘ acquisition (110) du numéro du document d'identité de l'individu par lecture de la zone de lecture automatique du document d'identité, et
∘ enregistrement (130), dans une mémoire (20) distante, du numéro en lien avec la donnée biométrique de l'individu, et
- lors d'une deuxième étape (200) mise en oeuvre par un deuxième dispositif de contrôle (30),
∘ acquisition (210) d'une deuxième donnée biométrique sur le même trait biométrique de l'individu que celui sur lequel la première donnée a été acquise,
∘ à partir de la deuxième donnée biométrique, récupération (220), dans la mémoire, du numéro de document d'identité correspondant au trait biométrique de l'individu,
∘ à partir du numéro du document d'identité de l'individu, accès au contenu de la puce électronique du document d'identité et récupération de la donnée biométrique d'authentification (240), et
∘ mise en oeuvre d'une authentification biométrique (250) de l'individu par comparaison de la donnée biométrique d'authentification stockée dans la puce et d'une donnée biométrique acquise par le deuxième dispositif de contrôle.

2. Procédé selon la revendication 1, dans lequel la donnée biométrique acquise par le deuxième dispositif de contrôle (30) pour l'étape d'authentification biométrique (250) est la deuxième donnée biométrique, ou une autre donnée biométrique acquise sur un trait biométrique différent.

3. Procédé selon l'une des revendications 1 ou 2, dans lequel l'étape de récupération (220) du numéro du document d'identité dans la mémoire comprend :
- une comparaison des données biométriques stockées dans la mémoire avec la deuxième donnée biométrique, et
- la sélection d'au moins un numéro correspondant à au moins une donnée biométrique présentant un taux de similarité avec la deuxième donnée supérieure à un seuil prédéterminé.

4. Procédé selon la revendication 3, dans lequel, si plus d'un numéro de document d'identité a été sélectionné, l'étape d'accès au contenu de la puce (240) du document d'identité comprend la mise en oeuvre d'une tentative d'ouverture de la puce à partir de chaque numéro sélectionné jusqu'à l'ouverture de la puce.

5. Procédé selon l'une des revendications 3 ou 4, dans lequel la première étape comprend également l'enregistrement, dans la mémoire distante (20), d'au moins une donnée supplémentaire en lien avec le numéro du document d'identité et la première donnée biométrique,
et l'étape de récupération du numéro du document d'identité comprend la présélection, dans la mémoire, des données biométriques et des numéros de documents associés à ladite donnée supplémentaire.

6. Procédé selon la revendication 5, dans lequel lors de la deuxième étape (200), la donnée supplémentaire est acquise (220) par le deuxième dispositif de contrôle (30), ou est connue du deuxième dispositif de contrôle (30) en étant associée à celui-ci.

7. Procédé selon l'une des revendications précédentes, dans lequel le trait biométrique sur lequel sont acquises les première et deuxième données biométrique est choisi parmi le groupe comprenant : une ou plusieurs empreintes digitales, un ou plusieurs iris, le visage de l'individu, le réseau veineux d'un ou plusieurs doigts ou d'une ou des deux mains, ou les tailles respectives de phalanges ou de doigts.

8. Procédé selon l'une des revendications précédentes, dans lequel l'étape (100) comprend l'acquisition (120) d'une pluralité de données biométriques sur des traits biométriques différents de l'individu, et l'enregistrement (130) du numéro du document en lien avec chacune des données biométriques.

9. Procédé selon l'une des revendications précédentes, dans lequel le document d'identité est un passeport, et :
- lors de la première étape (100), le passeport est présenté ouvert à la page de la zone de lecture automatique auprès premier dispositif de contrôle (10) pour la mise en oeuvre de l'étape d'acquisition du numéro du passeport (110), et
- lors de la deuxième étape (200), le passeport est présenté fermé auprès deuxième dispositif de contrôle (30) pour la mise en oeuvre de l'étape d'accès au contenu de la puce (240).

10. Procédé selon la revendication précédente, dans lequel lors de la deuxième étape (200), le passeport est présenté dans une orientation quelconque relativement au deuxième dispositif de contrôle (30).

11. Procédé selon l'une des revendications précédentes, dans lequel le premier dispositif de contrôle (10) est distant physiquement du deuxième, et est un dispositif personnel à l'individu parmi un téléphone mobile, une tablette numérique, et un ordinateur personnel, ou un kiosque installé dans une même infrastructure que le deuxième dispositif de contrôle (30).

12. Produit programme d'ordinateur, comprenant des instructions de code pour la mise en oeuvre de la première étape du procédé selon les revendications 1 à 11, comprenant des étapes de :
- acquisition et traitement d'une image d'un trait biométrique d'un individu pour obtenir une donnée biométrique,
- lecture d'une zone de lecture automatique d'un document d'identité pour acquérir un numéro du document, et
- enregistrement (130), dans une mémoire (20) distante, du numéro en lien avec la donnée biométrique,
quand il est mis en oeuvre par un processeur.

13. Produit programme d'ordinateur, comprenant des instructions de code pour la mise en oeuvre de la deuxième étape du procédé selon les revendications 1 à 11, comprenant des étapes de :
- acquisition et traitement d'une image d'un trait biométrique d'un individu pour obtenir une donnée biométrique,
- à partir de ladite donnée biométrique, récupération (220), dans une mémoire, d'un numéro de document d'identité correspondant au trait biométrique à partir duquel la donnée a été acquise, et
- à partir du numéro du document d'identité de l'individu, accès au contenu de la puce électronique du document d'identité et récupération d'une donnée biométrique d'authentification (240) contenue dans ladite puce,
quand il est mis en oeuvre par un processeur

14. Système (1) de contrôle d'individus, comprenant :
- une mémoire (20),
- un premier dispositif de contrôle (10), comprenant un module (12) de lecture d'une zone de lecture automatique d'un document d'identité, un module (15) d'acquisition de donnée biométrique, et une interface de communication avec la mémoire (17), et
- un deuxième dispositif de contrôle (30), comprenant un module d'acquisition de donnée biométrique (32), un lecteur (36) adapté pour accéder au contenu d'une puce d'un document d'identité, et une interface de communication avec la mémoire (35),
**caractérisé en ce qu'**il est adapté pour la mise en oeuvre du procédé selon l'une des revendications 1 à 11.

15. Système (1) de contrôle d'individus selon la revendication 14, dans lequel le premier dispositif de contrôle (10) est un dispositif électronique personnel d'un individu parmi un ordinateur personnel, un téléphone mobile et une tablette numérique.

## Patentansprüche

1. Verfahren zum Kontrollieren einer Person, die über ein Ausweisdokument verfügt, das einen maschinenlesbaren Bereich umfasst, der eine Nummer des Dokuments und einen elektronischen Chip beinhaltet, in dem eine biometrische Information zur Authentifizierung der Person gespeichert ist, wobei das Verfahren umfasst:
- bei einem durch eine erste Kontrollvorrichtung (10) ausgeführten ersten Schritt (100)
-- Erfassen (120) einer ersten biometrischen Information bezüglich eines biometrischen Merkmals der Person,
-- Erfassen (110) der Nummer des Ausweisdokuments der Person durch Auslesen des maschinenlesbaren Bereichs des Ausweisdokuments, und
-- Abspeichern (130) der Nummer in Verbindung mit der biometrischen Information der Person in einem abgesetzten Speicher (20), und
- bei einem durch eine zweite Kontrollvorrichtung (30) ausgeführten zweiten Schritt (200)
-- Erfassen (210) einer zweiten biometrischen Information bezüglich des gleichen biometrischen Merkmals der Person wie jenem, dembezüglich die erste Information erfasst wurde,
-- Abrufen (220), anhand der zweiten biometrischen Information, der dem biometrischen Merkmal der Person entsprechenden Ausweisdokumentennummer im Speicher,
-- Zugreifen auf den Inhalt des elektronischen Chips des Ausweisdokuments und Abrufen der biometrischen Authentifizierungsinformation (240) anhand der Nummer des Ausweisdokuments der Person, und
-- Ausführen einer biometrischen Authentifizierung (250) der Person durch Vergleichen der im Chip gespeicherten biometrischen Authentifizierungsinformation und einer biometrischen Information, die durch die zweite Kontrollvorrichtung erfasst wurde.

2. Verfahren nach Anspruch 1, wobei die für den Schritt der biometrischen Authentifizierung (250) durch die zweite Kontrollvorrichtung (30) erfasste biometrische Information die zweite biometrische Information oder eine andere biometrische Information ist, die bezüglich eines unterschiedlichen biometrischen Merkmals erfasst wurde.

3. Verfahren nach einem der Ansprüche 1 oder 2, wobei der Schritt des Abrufens (220) der Nummer des Ausweisdokuments im Speicher umfasst:
- ein Vergleichen der im Speicher gespeicherten biometrischen Informationen mit der zweiten biometrischen Information, und
- das Auswählen von mindestens einer Nummer, die mindestens einer biometrischen Information entspricht, die einen über einer vorbestimmten Schwelle liegenden Ähnlichkeitsgrad mit der zweiten Information aufweist.

4. Verfahren nach Anspruch 3, wobei, wenn mehr als eine Ausweisdokumentennummer ausgewählt wurde, der Schritt des Zugreifens auf den Inhalt des Chips (240) des Ausweisdokuments das Ausführen eines Versuches zum Öffnen des Chips anhand jeder ausgewählten Nummer bis zum Öffnen des Chips umfasst.

5. Verfahren nach einem der Ansprüche 3 oder 4, wobei der erste Schritt ebenfalls das Abspeichern von mindestens einer zusätzlichen Information in Verbindung mit der Nummer des Ausweisdokuments und der ersten biometrischen Information im abgesetzten Speicher (20) umfasst,
und der Schritt des Abrufens der Nummer des Ausweisdokuments das Vorauswählen der biometrischen Informationen und der dieser zusätzlichen Information zugeordneten Dokumentennummern im Speicher umfasst.

6. Verfahren nach Anspruch 5, wobei beim zweiten Schritt (200) die zusätzliche Information durch die zweite Kontrollvorrichtung (30) abgerufen wird (220) oder der zweiten Kontrollvorrichtung (30) bekannt ist, indem sie dieser zugeordnet ist.

7. Verfahren nach einem der vorstehenden Ansprüche, wobei das biometrische Merkmal, dembezüglich die erste und zweite biometrische Information erfasst werden, ausgewählt sind aus der Gruppe umfassend: einen oder mehrere Fingerabdrücke, eine oder mehrere Iris, das Gesicht der Person, das Venennetz eines oder mehrerer Finger oder einer oder der beiden Hände, oder die jeweiligen Größen von Fingerknochen oder von Fingern.

8. Verfahren nach einem der vorstehenden Ansprüche, wobei der Schritt (100) das Erfassen (120) einer Vielzahl von biometrischen Informationen bezüglich unterschiedlicher biometrischer Merkmale der Person, und das Abspeichern (130) der Nummer des Dokuments in Verbindung mit jeder der biometrischen Informationen umfasst.

9. Verfahren nach einem der vorstehenden Ansprüche, wobei das Ausweisdokument ein Pass ist, und:
- beim ersten Schritt (100) der Pass auf der Seite des maschinenlesbaren Bereichs geöffnet an der ersten Kontrollvorrichtung (10) vorgezeigt wird, zum Ausführen des Schrittes des Erfassens der Nummer des Passes (110) und
- beim zweiten Schritt (200) der Pass an der zweiten Kontrollvorrichtung (30) geschlossen vorgezeigt wird, zum Ausführen des Schrittes des Zugreifens auf den Inhalt des Chips (240).

10. Verfahren nach dem vorstehenden Anspruch, wobei beim zweiten Schritt (200) der Pass bezogen auf die zweite Kontrollvorrichtung (30) in einer beliebigen Ausrichtung vorgezeigt wird.

11. Verfahren nach einem der vorstehenden Ansprüche, wobei die erste Kontrollvorrichtung (10) physisch von der zweiten abgesetzt ist und eine der Person eigene Vorrichtung aus einem Mobiltelefon, einem digitalen Tablet und einem Personalcomputer, oder ein in einer gleichen Infrastruktur wie die zweite Kontrollvorrichtung (30) installierter Kiosk ist.

12. Computerprogrammprodukt, das Codeanweisungen zum Ausführen des ersten Schrittes des Verfahrens nach den Ansprüchen 1 bis 11 umfasst, umfassend Schritte des:
- Erfassens und Verarbeitens eines Bildes eines biometrischen Merkmals einer Person, um eine biometrische Information zu erhalten,
- Auslesens eines maschinenlesbaren Bereichs eines Ausweisdokuments, um eine Nummer des Dokuments zu erfassen, und
- Abspeicherns (130) der Nummer in Verbindung mit der biometrischen Information in einem abgesetzten Speicher (20),
wenn es durch einen Prozessor ausgeführt wird.

13. Computerprogrammprodukt, das Codeanweisungen zum Ausführen des zweiten Schrittes des Verfahrens nach den Ansprüchen 1 bis 11 umfasst, umfassend Schritte des:
- Erfassens und Verarbeitens eines Bildes eines biometrischen Merkmals einer Person, um eine biometrische Information zu erhalten,
- Abrufens (220), anhand der biometrischen Information, einer Ausweisdokumentennummer in einem Speicher, die dem biometrischen Merkmal entspricht, anhand dessen die Information erfasst wurde, und
- Zugreifens auf den Inhalt des elektronischen Chips des Ausweisdokuments und Abrufens einer in dem Chip enthaltenen biometrischen Authentifizierungsinformation (240) anhand der Nummer des Ausweisdokuments der Person,
wenn es durch einen Prozessor ausgeführt wird.

14. Personenkontrollsystem (1), umfassend:
- einen Speicher (20),
- eine erste Kontrollvorrichtung (10), die ein Modul (12) zum Auslesen eines maschinenlesbaren Bereichs eines Ausweisdokuments, ein Modul (15) zum Erfassen von biometrischen Informationen, und eine Schnittstelle zum Kommunizieren mit dem Speicher (17) umfasst, und
- eine zweite Kontrollvorrichtung (30), die ein Modul zum Erfassen von biometrischen Informationen (32), ein Lesegerät (36), das dafür ausgebildet ist, auf den Inhalt eines Chips eines Ausweisdokuments zuzugreifen, und eine Schnittstelle zum Kommunizieren mit dem Speicher (35) umfasst,
**dadurch gekennzeichnet, dass** es zum Ausführen des Verfahren nach einem der Ansprüche 1 bis 11 ausgebildet ist.

15. Personenkontrollsystem (1) nach Anspruch 14, wobei die erste Kontrollvorrichtung (10) eine einer Person eigene elektronische Vorrichtung aus einem Personalcomputer, einem Mobiltelefon und einem digitalen Tablet ist.

## Claims

1. Method for inspecting an individual possessing an identity document comprising an automatic reading zone in which a number of the document is present and an electronic chip in which an item of biometric data for authenticating the individual is stored, the method comprising:
- during a first step (100) carried out by a first inspection device (10),
-- acquisition (120) of a first item of biometric data on a biometric trait of the individual,
-- acquisition (110) of the number of the identity document of the individual by reading the automatic reading zone of the identity document, and
-- recording (130), in a remote memory (20), of the number related to the item of biometric data of the individual, and
- during a second step (200) carried out by a second inspection device (30),
-- acquisition (210) of a second item of biometric data on the same biometric trait of the individual as that on which the first item of data was acquired,
-- on the basis of the second item of biometric data, recovery (220), in the memory, of the identity document number corresponding to the biometric trait of the individual,
-- on the basis of the number of the identity document of the individual, access to the contents of the electronic chip of the identity document and recovery of the item of authentication biometric data (240), and
-- implementation of biometric authentication (250) of the individual by comparing the item of authentication biometric data stored in the chip and an item of biometric data acquired by the second inspection device.

2. Method according to claim 1, wherein the item of biometric data acquired by the second inspection device (30) for the step of biometric authentication (250) is the second item of biometric data, or another acquired item of biometric data on a different biometric trait.

3. Method according to one of claims 1 and 2, wherein the step of recovery (220) of the number of the identity document in the memory comprises:
- a comparison of the biometric data stored in the memory to the second item of biometric data, and
- the selection of at least one number corresponding to at least one item of biometric data having a level of similarity to the second item of data that is greater than a predetermined threshold.

4. Method according to claim 3, wherein if more than one identity document number was selected, the step of access to the contents of the chip (240) of the identity document comprises attempting to open the chip using each number selected until the chip is opened.

5. Method according to one of claims 3 and 4, wherein the first step also comprises the recording, in the remote memory (20), of at least one additional item of data related to the number of the identity document and the first item of biometric data,
and the step of recovery of the number of the identity document comprises the preselection, in the memory, of the biometric data and of the numbers of the documents associated with said additional item of data.

6. Method according to claim 5, wherein during the second step (200), the additional item of data is acquired (220) by the second inspection device (30), or is known to the second inspection device (30) by being associated with the latter.

7. Method according to one of the previous claims, wherein the biometric trait on which the first and second items of biometric data are acquired is chosen from the group comprising: one or more fingerprints, one or more irises, the face of the individual, the vein pattern of one or more fingers or of one or both hands, or the respective sizes of phalanges or of fingers.

8. Method according to one of the previous claims, wherein the step (100) comprises the acquisition (120) of a plurality of items of biometric data on different biometric traits of the individual, and the recording (130) of the number of the document related to each of the items of biometric data.

9. Method according to one of the previous claims, wherein the identity document is a passport, and:
- during the first step (100), the passport is presented open to the page of the automatic reading zone to the first inspection device (10) for the implementation of the step of acquisition of the number of the passport (110), and
- during the second step (200), the passport is presented closed to the second inspection device (30) for the implementation of the step of access to the contents of the chip (240).

10. Method according to the previous claim, wherein during the second step (200), the passport is presented with any orientation with respect to the second inspection device (30).

11. Method according to one of the previous claims, wherein the first inspection device (10) is physically remote from the second, and is a personal device of the individual chosen from a mobile telephone, a tablet computer, and a personal computer, or a kiosk installed in the same infrastructure as the second inspection device (30).

12. Computer program product, comprising code instructions for the implementation of the first step of the method according to claims 1 to 11, comprising the following steps:
- acquisition and processing of an image of a biometric trait of an individual in order to obtain an item of biometric data,
- reading of an automatic reading zone of an identity document in order to acquire a number of the document, and
- recording (130), in a remote memory (20), of the number related to the item of biometric data,
when it is implemented by a processor.

13. Computer program product, comprising code instructions for the implementation of the second step of the method according to claims 1 to 11, comprising the following steps:
- acquisition and processing of an image of a biometric trait of an individual in order to obtain an item of biometric data,
- on the basis of said item of biometric data, recovery (220), in a memory, of an identity document number corresponding to the biometric trait on the basis of which the item of data was acquired, and
- on the basis of the number of the identity document of the individual, access to the contents of the electronic chip of the identity document and recovery of an item of authentication biometric data (240) contained in said chip,
when it is implemented by a processor.

14. System (1) for inspecting individuals, comprising:
- a memory (20),
- a first inspection device (10), comprising a module (12) for reading an automatic reading zone of an identity document, a module (15) for acquiring an item of biometric data, and an interface for communication with the memory (17), and
- a second inspection device (30), comprising a module for acquiring an item of biometric data (32), a reader (36) suitable for accessing the contents of a chip of an identity document, and an interface for communication with the memory (35),
**characterised in that** it is suitable for implementing the method according to one of claims 1 to 11.

15. System (1) for inspecting individuals according to claim 14, wherein the first inspection device (10) is a personal electronic device of an individual chosen from a personal computer, a mobile telephone and a tablet computer.
